# EUROPÄISCHE PATENTSCHRIFT

(11) **EP 2 203 650 B1**
(45) Veröffentlichungstag und Bekanntmachung des Hinweises auf die Patenterteilung: **05.12.2018**
(21) Anmeldenummer: 08803096.0
(22) Anmeldetag: 19.08.2008
(51) Int. Cl.: F15B 15/28

(54) **MESSVORRICHTUNG UND LENKZYLINDER MIT EINER SOLCHEN MESSVORRICHTUNG**
MEASURING DEVICE AND STEERING CYLINDER THEREWITH
APPAREIL DE MESURE POUR VÉRIN ET VÉRIN DE DIRECTION AVEC LEQUEL

(30) Priorität: 27.09.2007 DE 102007046139
(43) Veröffentlichungstag der Anmeldung: 07.07.2010
(73) Patentinhaber: Deere & Company, Moline, IL 61265 (US)
(72) Erfinder: TARASINSKI, Nicolai, 67227 Frankenthal (DE)
(74) Vertreter: Dehnhardt, Florian Christopher
(86) Internationale Anmeldenummer: PCT/EP2008/060859
(87) Internationale Veröffentlichungsnummer: WO 2009/043637

(56) Entgegenhaltungen:
- EP-A- 0 268 030
- EP-A- 1 669 318
- DE-A1- 1 540 593
- DE-A1- 3 614 300
- DE-A1- 4 105 702
- DE-A1-102005 005 011
- US-A- 4 961 055
- US-A- 5 886 617

## Beschreibung

Die Erfindung betrifft eine Messvorrichtung zur Bestimmung der Position eines in einem Zylindergehäuse bewegbar angeordneten Kolbens eines Zylinders. Die Messvorrichtung umfasst eine Einrichtung zum Erzeugen einer Referenzspannung, eine Appliziereinrichtung zum Anlegen der Referenzspannung, eine Abgreifeinrichtung zum Abgreifen einer Messspannung und eine Auswerteeinrichtung. Des Weiteren betrifft die vorliegende Erfindung einen mit einer derartigen Messvorrichtung ausgestatteten Lenkzylinder einer Lenkanlage eines Fahrzeugs.
Ein Zylinder im Sinne der vorliegenden Erfindung weist insbesondere ein Zylindergehäuse und einen darin bewegbar angeordneten Kolben auf. Der Kolben weist üblicherweise einen Kolbenkörper und/oder eine Kolbenstange auf. Die Kolbenstange kann aus dem Zylindergehäuse herausragen bzw. austreten.
Zur Bestimmung der Position eines Kolbens, welcher in einem Zylindergehäuse bewegbar angeordnet ist, also beispielsweise eines Kolbens eines Hydraulikzylinders, sind zahlreiche technische Lösungen bekannt. Insbesondere können resistive, kapazitive, optische, magnetische oder induktive Messaufnehmer an dem Zylinder angebaut oder in den Zylinder integriert werden. Weiterhin sind Lösungen bekannt, bei welchen die Kolbenstange als Teil des Messsystems dient, indem beispielsweise die Kolbenstange in bestimmter Weise magnetisiert, beschichtet oder geätzt ist, um einen Wegmaßstab darzustellen, der von einem Aufnehmer oder Sensor abgetastet und erfasst wird. Die oben genannten Lösungen erfordern in der Regel teure Sensorelemente und/oder eine spezielle Bearbeitung oder Behandlung des Kolbens bzw. der Kolbenstange. Weiterhin sind diese gegenüber äußeren Umwelteinflüssen, wie Verschmutzung, Regenwasser, Temperaturschwankungen und mechanischen Belastungen empfindlich.
In diesem Zusammenhang sei beispielsweise auf die US 4 961 055 hingewiesen, aus welcher eine nach einem kapazitiven Messprinzip arbeitende Messvorrichtung für einen Zylinder bekannt ist.

Eine Messvorrichtung nach dem Oberbegriff von Anspruch 1 ist aus US 5 886 617 A bekannt. Der vorliegenden Erfindung liegt daher die Aufgabe zugrunde, eine Messvorrichtung der eingangs genannten Art anzugeben und weiterzubilden, durch welche die vorgenannten Probleme überwunden werden. Insbesondere soll eine Messvorrichtung der eingangs genannten Art mit geringem technischem Aufwand kostengünstig realisierbar sein.
Diese Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.
Erfindungsgemäß ist eine Messvorrichtung der eingangs genannten Art dadurch gekennzeichnet, dass an einer ersten und an einer zweiten Position mittels der Appliziereinrichtung die Referenzspannung am Zylinder anlegbar ist. Die erste Position ist bezüglich der Bewegungsrichtung des Kolbens beabstandet zu der zweiten Position angeordnet. Mittels der Abgreifeinrichtung ist an einer dritten Position des Zylinders die Messspannung abgreifbar. Der Wert der Referenzspannung und der Wert der Messspannung sind der Auswerteeinrichtung zuführbar.
Die Einrichtung zum Erzeugen einer Referenzspannung stellt nicht nur die Referenzspannung bereit, sondern auch einen Referenzstrom. Dementsprechend kann mittels der Appliziereinrichtung die Referenzspannung an dem Zylinder angelegt werden bzw. der Referenzstrom in den Zylinder eingeleitet werden. Die Abgreifeinrichtung dient einerseits zum Abgreifen der Messspannung und andererseits zum Abgreifen des Messstroms. Falls im Folgenden lediglich von einer Referenzspannung oder einer Messspannung die Rede ist, kann entsprechendes sinngemäß auch für den Referenzstrom bzw. den Messstrom gelten. Die elektrische Verbindung zwischen der Einrichtung zum Erzeugen der Referenzspannung und der Appliziereinrichtung kann beispielsweise mit Hilfe flexibler, elektrisch leitfähiger Kabel realisiert werden, welche an jeweils der ersten und zweiten Position am Zylinder befestigbar sind. In vergleichbarer Weise kann mittels der Abgreifeinrichtung an der dritten oder an einer weiteren Position des Zylinders die Messspannung abgegriffen werden, wobei die elektrische Verbindung mit der Auswerteeinheit ebenfalls mit Hilfe flexibler, elektrisch leitfähiger Kabel realisiert ist.

Erfindungsgemäß ist zunächst erkannt worden, dass der Zylinder und insbesondere ein Hydraulikzylinder selbst als variabler elektrischer Widerstand bzw. als variabler elektrischer Spannungsteiler (Potentiometer) verwendet werden kann. Die Änderung des elektrischen Widerstands bzw. die Änderung eines Widerstandsverhältnisses des Zylinders kann somit als Maß für die Position des in dem Zylindergehäuse bewegbar angeordneten Kolbens des Zylinders dienen. Entlang des Kolbens bzw. der Kolbenstange findet ein Spannungsabfall statt. Üblicherweise weist ein Kolben bzw. eine Kolbenstange über den aktiven Bereich, über welchen der Kolben bzw. die Kolbenstange verfahren wird, einen gleichbleibenden Querschnitt auf. Dementsprechend ist ein Spannungsabfall über diesen aktiven Bereich linear von der Entfernung zu der ersten bzw. der zweiten Position der Appliziereinrichtung abhängig, an welcher die Referenzspannung an den Zylinder angelegt wird.

Gemäß einer bevorzugten Ausführungsform ist die dritte Position von der ersten Position und/oder von der zweiten Position beabstandet angeordnet. So kann die dritte Position zwischen der ersten und der zweiten Position angeordnet sein, beispielsweise genau in der Mitte. Es ist jedoch auch denkbar, dass die dritte Position bei oder in räumlicher Nähe der ersten oder der zweiten Position angeordnet ist. Auch eine Anordnung der dritten Position an einer Stelle, welche nicht zwischen der ersten und der zweiten Position lokalisiert ist, ist denkbar.

Es besteht die Möglichkeit, an der ersten bzw. zweiten Position, an welcher mittels der Appliziereinrichtung die Referenzspannung am Zylinder anlegbar ist, die Referenzspannung selbst abzugreifen und zu messen, gemäß einem sogenannten Kelvin-Abgriff. Hierdurch kann die tatsächliche Höhe der Referenzspannung direkt an dem Zylinder erfasst werden, was die Messgenauigkeit erhöht und einen Rückschluss auf eventuelle Fehler ermöglicht. Daher weist bevorzugt die Abgreifeinrichtung mindestens ein Mittel auf, mittels welchem die Referenzspannung am Zylinder abgreifbar ist, wobei vorzugsweise ein erstes Mittel an der ersten Position und ein zweites Mittel an der zweiten Position vorgesehen ist.

Gemäß einer bevorzugten Ausführungsform weist die Abgreifeinrichtung an mindestens einer weiteren Position mindestens ein weiteres Mittel auf, mittels welchem eine Messspannung am Zylinder abgreifbar ist. Durch das Vorsehen zumindest eines weiteren Mittels zum Erfassen der jeweiligen Messspannung kann einerseits die Messgenauigkeit erhöht und andererseits kann der Nebenschlusswiderstand, welcher durch das Gehäuse des Zylinders verursacht wird, erfasst und gegebenenfalls kompensiert werden.

Grundsätzlich kann mindestens eine der drei Positionen an dem Zylindergehäuse und/oder an dem Kolben vorgesehen sein. Vorzugsweise ist eine solche Position am äußeren Ende des Kolbens bzw. der Kolbenstange vorgesehen. So kann die erste Position an einem Ende eines Kolbens eines Differenzialzylinders angeordnet sein. Die zweite Position kann an dem gegenüberliegenden Ende des Kolbens des Differenzialzylinders angeordnet sein und die dritte Position, an welcher mittels der Abgreifeinrichtung die Messspannung abgreifbar ist, kann in einem mittleren Bereich des Zylindergehäuses des Differenzialzylinders angeordnet sein. Alternativ kann die erste Position an einem äußeren Ende des Kolbens eines lediglich einseitig aus dem Zylindergehäuse austretenden Kolbens bzw. einer lediglich einseitig aus dem Zylindergehäuse austretenden Kolbenstange vorgesehen sein. Die zweite Position kann an dem der ersten Position gegenüberliegenden Ende des Zylindergehäuses angeordnet und die dritte Position kann in einem mittleren Bereich des Zylindergehäuses zwischen der ersten und der zweiten Position angeordnet sein. Hierbei kann das Zylindergehäuse mit dem Kolben elektrisch verbunden sein, beispielsweise mittels eines im Zylinder vorgesehenen flexiblen, elektrisch leitenden Kabel. Es kann jedoch auch die erste und die zweite Position jeweils an einem Endbereich des Zylindergehäuses eines Differenzialzylinders und die dritte Position an einem Ende des Kolbens angeordnet sein.

Gemäß einer bevorzugten Ausführungsform ist die erste, zweite und/oder dritte Position an der Außenseite des Zylinders angeordnet. Dies kann beispielsweise kostengünstig durch Anlöten oder Anschrauben entsprechender Kabelenden erfolgen. Dabei ist es zudem nicht erforderlich, den Zylinder in besonderer Weise auszugestalten, wie dies beispielsweise im Falle der US 4 961 055 vorgesehen ist. Insoweit kann in vorteilhafter Weise die erfindungsgemäße Messvorrichtung an einem herkömmlichen Zylinder bzw. Hydraulikzylinder - auch nachträglich - adaptiert bzw. realisiert werden. Jedenfalls ist das Innere des Zylinders nicht oder nur unwesentlich zu modifizieren.

Gemäß einer weiteren bevorzugten Ausführungsform weist die Abgreifeinrichtung am Eintritt des Kolbens bzw. der Kolbenstange in das Zylindergehäuse mindestens einen Schleifkontakt auf, welcher mit dem Kolben bzw. der Kolbenstange elektrisch leitend verbunden ist. Auf diese Weise kann die Messung unabhängig von den Kontaktwiderstandsverhältnissen im Bereich der Dichtungen zwischen Kolben und Zylindergehäuse realisiert werden. Es ist denkbar, dass der Schleifkontakt am Eintritt des Kolbens bzw. der Kolbenstange in das Zylindergehäuse den einzigen Abgriff für die Messspannung darstellt.

Ferner kann vorgesehen sein, dass im Bereich des Eintritts des Kolbens in das Zylindergehäuse eine elektrisch isolierende Dichtung zwischen dem Kolben bzw. der Kolbenstange und dem Zylindergehäuse vorgesehen ist. Als elektrisch isolierende Dichtung kann beispielsweise eine Keramikbeschichtung oder eine Gummi- oder Kunststoffdichtung vorgesehen sein. So kann beispielsweise ein herkömmliches, metallisches Gleitlager vorgesehen sein, welches gehäuseseitig mit einem elektrisch isolierenden Material umgeben ist. Durch diese Maßnahme kann weitgehend der Nebenschlusswiderstand aufgrund des Gehäuses vermieden werden.

Gemäß einer bevorzugten Ausführungsform ist der Kolben mit dem Zylindergehäuse elektrisch leitend verbunden. Dies kann beispielsweise mittels eines Schleifkontakts zwischen dem Kolben und der Innenwand des Zylindergehäuses realisiert werden, wobei der Schleifkontakt ungefähr in der Mitte des Kolbens bzw. der Kolbenstange angeordnet sein und einen elektrischen Kontakt mit dem Inneren des Zylindergehäuses herstellen kann. Hierdurch kann ein sicherer Messspannungsabgriff gewährleistet werden. Zusätzlich oder alternativ können im Zylinder im Bereich der Dichtungen die dort unter Umständen ohnehin vorhandenen metallischen Berührungspunkte zwischen Kolben und Zylindergehäuse als Abgriff bzw. als Überbrückung für die Messspannung dienen.

Falls der Zylinder derart ausgebildet ist, dass der Kolben lediglich an einer Seite des Zylinders ausfahren bzw. einfahren kann, kann die erfindungsgemäße Messvorrichtung und das der Messvorrichtung zugrundeliegende Messprinzip auch an einem solchen Zylinder in vorteilhafter Weise angewendet werden. Derartige Zylinder werden bei industriellen Nutzfahrzeugen, wie beispielsweise bei Baggern und Baumaschinen, aber auch bei landwirtschaftlichen Nutzfahrzeugen, wie beispielsweise bei Ackerschleppern, häufig eingesetzt und dienen dort zum Ausführen von Positionierbewegungen bzw. zum Bewegen von Lasten. So sei beispielsweise auf das Hubwerk eines Dreipunkt-Geräteanbaus eines Traktors oder auf den mindestens einen Zylinder eines Frontladers hingewiesen. Für einen derartigen einseitig ausgeführten Zylinder kann es daher vorteilhaft sein, wenn mittels einer flexiblen elektrischen Leitung eine Position des Inneren des Zylindergehäuses mit einer Position des bewegbar angeordneten Kolbens im Inneren des Zylinders elektrisch verbunden ist.

Der Zylinder kann einen Hydraulikzylinder oder einen pneumatischen Zylinder aufweisen. Dementsprechend wird der Zylinder mit Hydraulikflüssigkeit derart angesteuert, dass der Kolben in das Zylindergehäuse eingefahren oder aus dem Zylindergehäuse ausgefahren wird. Hierzu kann der Hydraulikzylinder einfachwirkend ausgebildet sein, so dass lediglich das Ausfahren des Kolbens durch das Zuführen von unter Druck stehender Hydraulikflüssigkeit in den Kolbenraum des Hydraulikzylinders bewirkt wird. Alternativ kann der Hydraulikzylinder doppeltwirkend ausgebildet sein, also einen Kolbenraum und einen Ringraum aufweisen, welche jeweils mit unter Druck stehender Hydraulikflüssigkeit beaufschlagt werden können. Mit einem derartigen Hydraulikzylinder ist ein aktives Aus- und Einfahren des Kolbens bzw. der Kolbenstange möglich. Vergleichbare Wirkungsweisen sind für pneumatische Zylinder denkbar. Wie bereits angedeutet, kann der Zylinder einen lediglich an einer Seite des Zylinders austretenden Kolben bzw. eine lediglich an einer Seite des Zylinders austretende Kolbenstange aufweisen. Alternativ hierzu kann der Zylinder an zwei gegenüberliegenden Seiten den Kolben bzw. die Kolbenstange aus dem Zylindergehäuse herausführen, wie dies beispielsweise bei einem Differenzialzylinder der Fall ist.

Gemäß einer bevorzugten Ausführungsform ist mittels der Einrichtung zum Erzeugen einer Referenzspannung eine Gleichspannung, eine Wechselspannung oder eine gepulste Gleichspannung als Referenzspannung bereitstellbar. Die von der Einrichtung zum Erzeugen der Referenzspannung erzeugte Gleichspannung bzw.

Wechselspannung ist derart bemessen, dass sich die erforderliche Leistung mit üblichen elektronischen Bauteilen problemlos erzeugen lässt. Da andererseits der elektrische Widerstand des Kolbens bzw. der Kolbenstange des Zylinders vergleichsweise gering ist, wird die Referenzspannung dementsprechend klein und der Referenzstrom dementsprechend hoch zu wählen sein. So kann beispielsweise für einen Hydraulikzylinder mit einem Kolbenstangendurchmesser von 30 mm eine Referenzspannung von 10 mV und ein Referenzstrom von 100 A gewählt werden. Selbstverständlich sind hiervon abweichende Werte über einen weiten Bereich möglich bzw. zweckmäßig, da das Messprinzip grundsätzlich nicht von der Höhe der Referenzspannung abhängt.

Falls die Einrichtung zum Erzeugen einer Referenzspannung eine Wechselspannung bereitstellt, kann infolge des Skin-Effekts der Strom vermehrt an der Oberfläche des Kolbens bzw. der Kolbenstange fließen. Hierdurch ergibt sich gegenüber der Verwendung von Gleichstrom ein höherer Spannungsabfall, welcher leichter auswertbar ist. Falls die Einrichtung zum Erzeugen einer Referenzspannung eine gepulste Gleichspannung bereitstellt, besteht die Möglichkeit, dass immer nur dann Referenzspannung angelegt wird, wenn eine Messspannung gemessen werden soll. Die mittlere Leistungsaufnahme ist daher geringer als bei Verwendung einer nicht gepulsten, mithin kontinuierlichen Gleichspannung.

Zur Auswertung der Messspannung bzw. der gemessenen Referenzspannung mittels der Auswerteeinrichtung können aus dem Stand der Technik bekannte Verfahren dienen. Insbesondere können Trägerfrequenzmessverstärker oder Messbrückenverstärker eingesetzt werden.

Gemäß einer bevorzugten Ausführungsform erfolgt die Auswertung der Messspannung mittels eines mehrkanaligen Delta-Sigma-Analog-Digitalwandlers, beispielsweise dem Modell LTC 2444 der Fa. Linear Technology Corporation, 1630 McCarthy Boulevard, Milpitas, California 95035, USA. Dementsprechend weist die Auswerteeinrichtung einen derartigen mehrkanaligen Delta-Sigma-Analog-Digitalwandler auf. Hierbei kann das mindestens eine Mittel zum Messen der Referenzspannung mit den Referenzspannungseingängen des Delta-Sigma-Analog-Digitalwandlers verbunden werden. In diesem Fall misst der Delta-Sigma-Analog-Digitalwandler alle Eingangsgrößen bzw. Messspannungen stets relativ zur Referenzspannung. Dementsprechend ist es nicht erforderlich, eine separate Messung und Auswertung der Referenzspannung sowie eine stabilisierte Referenzspannung zur Verfügung zu stellen. Grundsätzlich gestattet ein solcher Delta-Sigma-Analog-Digitalwandler die wirtschaftliche Messung selbst vergleichsweise kleiner Gleich- und/oder Wechselspannungen mit hoher Genauigkeit, nämlich beispielsweise mit einer Auflösung von 0,0005% bzw. 24 bit.

Da der oben genannte Delta-Sigma-Analog-Digitalwandler mehrkanalig ausgeführt ist, ist es ohne weiteres möglich, mehrere Messspannungsabgriffe mittels des jeweils mindestens einen weiteren Mittels der Abgreifeinrichtung zum Abgreifen jeweils einer Messspannung am Zylinder an weiteren Positionen zu erfassen und auszuwerten. Hierdurch können Fehler, wie beispielsweise eine Unterbrechung einzelner Abgriffe, erkannt und kompensiert werden, indem beispielsweise im Normalbetrieb der Mittelwert mehrerer Abgriffe berechnet und als Positionssignal des Kolbens in dem Zylindergehäuse verwendet wird. Im Fehlerfall wird der betreffende Abgriff jedoch nicht berücksichtigt, was beispielsweise dadurch erkennbar ist, dass der Messspannungswert den Wert 0 aufweist oder nicht in relativer linearer Beziehung zu den anderen ermittelten Messspannungswerten steht. Weiterhin kann der durch den Nebenschlusswiderstand des Gehäuses fließende Anteil des Messstroms erfasst und rechnerisch kompensiert werden.

Für manche Anwendungen ist es erforderlich, dass die Position eines Kolbens in einem Kolbengehäuse eines Zylinders vollständig redundant bestimmt wird. Ein Beispiel hierfür ist die Zulassungsvorschrift ECE R79 für elektrische Lenkanlagen. Diese Anforderung kann mittels der erfindungsgemäßen Messvorrichtung insoweit erfüllt werden, als zu der vorstehend beschriebenen Messvorrichtung an dem Zylinder eine weitere Messvorrichtung vorgesehen ist, mittels welcher die Position des in dem Zylindergehäuse bewegbar angeordneten Kolbens redundant bestimmbar ist. Dementsprechend sind zur Positionsbestimmung zwei separate Einrichtungen zum Erzeugen einer jeweiligen Referenzspannung, zwei separate Appliziereinrichtungen zum Anlegen der Referenzspannung, zwei separate Abgreifeinrichtungen zum Abgreifen einer Messspannung sowie zwei separate Auswerteeinrichtungen vorzusehen. Auch alle Zu- und Ableitungen der Referenz- bzw. Messspannungen sind entsprechend separat vorzusehen. Da sich gemäß dem Superpositionsprinzip die Ströme der Referenzquellen linear überlagern, verändern sich im Fehlerfall nur die absoluten Spannungen. Die relativen Verhältnisse bleiben hierbei jedoch unverändert. Daher können bei der redundanten Verwendung mehrerer Messprinzipien in vorteilhafter Weise die Bauteile des Zylinders zur Wegmessung mit benutzt werden. Hierdurch ist die Anzahl der möglichen Fehlermodi des Systems in vorteilhafter Weise geringer als bei der Verwendung separater Sensorelemente.

Schließlich wird die eingangs genannte Aufgabe hinsichtlich eines Lenkzylinders einer Lenkanlage eines Fahrzeugs mit den Merkmalen des Patentanspruchs 12 gelöst. Demgemäß weist der Lenkzylinder ein Zylindergehäuse und einen darin bewegbar angeordneten Kolben auf. Die Position des Kolbens des Lenkzylinders in dem Zylindergehäuse ist mit mindestens einer Messvorrichtung nach einem der Patentansprüche 1 bis 11 bestimmbar.
Dabei kann es sich beispielsweise um eine Lenkwinkelerfassung an einer hydrostatischen Lenkanlage eines Nutzfahrzeugs, beispielsweise eines Traktors, handeln. Eine solche Lenkanlage kann Teil einer Steer-by-Wire-Lenkung sein. In diesem Ausführungsbeispiel ist es zweckmäßig, als Lenkzylinder einen in Form eines Differenzialzylinders ausgeführten Hydraulikzylinder vorzusehen. In diesem Fall ist die Kolbenstange an beiden Enden des Hydraulikzylinders herausgeführt und somit leicht für Messabgriffe der Abgreifeinrichtung bzw. für die Appliziereinrichtung zugänglich. Allgemein weisen Lenkzylinder auf beiden Seiten identische hydraulisch wirksame Querschnittsflächen auf, und die Lenkung kann symmetrische Bewegungen ausführen. Ein Ausführungsbeispiel für einen Lenkzylinder einer Lenkanlage ist in der Figurenbeschreibung dargestellt, so dass hierauf verwiesen wird. Bei einer derartigen Anwendung kann es erforderlich sein, neben einer ersten Messvorrichtung eine zweite Messvorrichtung vorzusehen, mittels welcher in redundanter Weise die Position des Kolbens des Lenkzylinders gemessen wird, wie beispielsweise in Patentanspruch 16 angegeben. Dementsprechend wird das erfindungsgemäße Messverfahren simultan oder zeitversetzt mittels zweier Messvorrichtungen am gleichen Zylinder zur Bestimmung der Kolbenposition im Zylinder angewandt.
Es gibt nun verschiedene Möglichkeiten, die Lehre der vorliegenden Erfindung in vorteilhafter Weise auszugestalten und weiterzubilden. Dazu wird einerseits auf die dem Patentanspruch 1 nachgeordneten Patentansprüche und andererseits auf die nachfolgende Erläuterung der bevorzugten Ausführungsbeispiele der Erfindung anhand der Zeichnungen verwiesen. In Verbindung mit der Erläuterung der bevorzugten Ausführungsbeispiele der Erfindung anhand der Zeichnungen werden auch im Allgemeinen bevorzugte Ausgestaltungen und Weiterbildungen der erfindungsgemäßen Lehre erläutert. In den Zeichnungen zeigen jeweils in einer schematischen Darstellung:

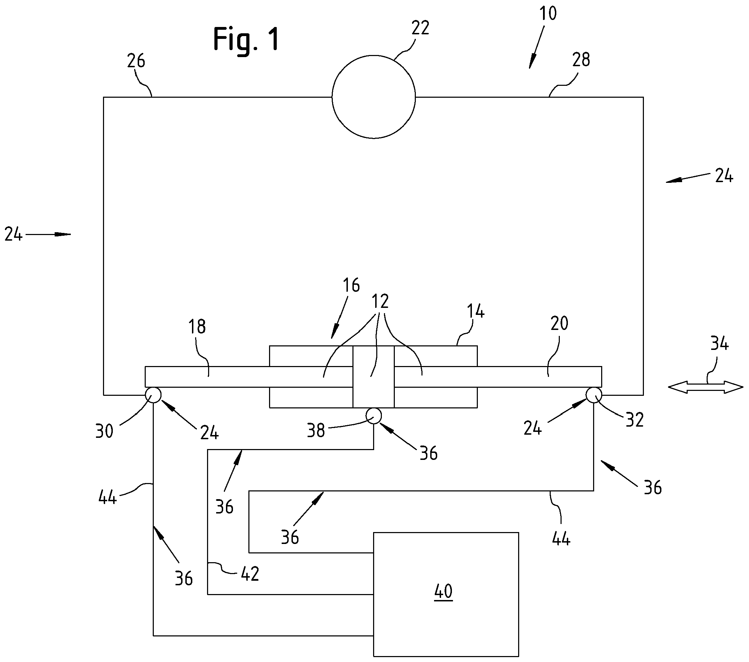

- Fig. 1 bis 6: jeweils ein Ausführungsbeispiel der vorliegenden Erfindung.

In den Figuren sind gleiche oder ähnliche Bauteile mit denselben Bezugszeichen gekennzeichnet.

Fig. 1 zeigt ein erstes Ausführungsbeispiel der Erfindung mit einer Messvorrichtung 10, mittels welcher die Bestimmung der Position eines Kolbens 12 in einem Zylindergehäuse 14 bestimmbar ist. Der Kolben 12 und das Zylindergehäuse 14 bilden einen Zylinder 16, welcher als Differenzialzylinder ausgeführt ist, bei welchem an beiden Enden des Zylinders 16 jeweils eine Kolbenstange 18 bzw. 20 herausgeführt ist. Der Zylinder 16 arbeitet auf hydraulischer Basis, wobei die Zu- bzw. Ableitungen für die Hydraulikflüssigkeit der Übersichtlichkeit halber nicht dargestellt sind.

Die Messvorrichtung 10 umfasst eine Einrichtung 22 zum Erzeugen einer Messspannung, welche eine Referenzspannung von 10 mV in Form einer Wechselspannung sowie einen Referenzstrom in Höhe von 100 A erzeugt. Die Referenzspannung wird mittels einer Appliziereinrichtung 24 an den Zylinder 16 angelegt. Die Appliziereinrichtung 24 umfasst elektrische Leitungen 26 und 28, welche sich jeweils von der Einrichtung 22 zum Erzeugen der Referenzspannung zu einer ersten Position 30 des linken Endes der Kolbenstange 18 bzw. zu einer zweiten Position 32 des rechten Endes der Kolbenstange 20 erstrecken. Die Leitungen 26 und 28 sind in Form von flexiblen Kabeln ausgeführt. Dementsprechend wird über die elektrischen Leitungen 26 und 28 an der ersten Position 30 und an der zweiten Position 32 mittels der Appliziereinrichtung 24 die von der Einrichtung 22 erzeugte Referenzspannung am Zylinder 16 angelegt. Die erste Position 30 ist bezüglich der Bewegungsrichtung des Kolbens 12 von der zweiten Position 32 beabstandet angeordnet. Die Bewegungsrichtung des Kolbens 12 ist mit einem Doppelpfeil 34 gekennzeichnet. Mittels einer Abgreifeinrichtung 36 ist an einer dritten Position 38 eine Messspannung abgreifbar. Die dritte Position 38 ist am Gehäuse 14 des Zylinders 16 angeordnet, und zwar im Wesentlichen in einem mittleren Bereich. Die Messspannung ist einer Auswerteeinrichtung 40 über eine elektrische Leitung 42 zuführbar. Die Abgreifeinrichtung 36 umfasst des weiteren Mittel, welche in Form von elektrischen Leitungen 44 ausgebildet sind. Mittels der elektrischen Leitungen 44 kann die am Zylinder 16 anliegende Referenzspannung an der ersten Position 30 bzw. an der zweiten Position 32 abgegriffen und der Auswerteeinrichtung 40 zugeführt werden. Somit kann die Auswerteeinrichtung 40 die Messspannung relativ zur am Zylinder 16 tatsächlich anliegenden Referenzspannung messen und auswerten (sog. Kelvin-Abgriff).

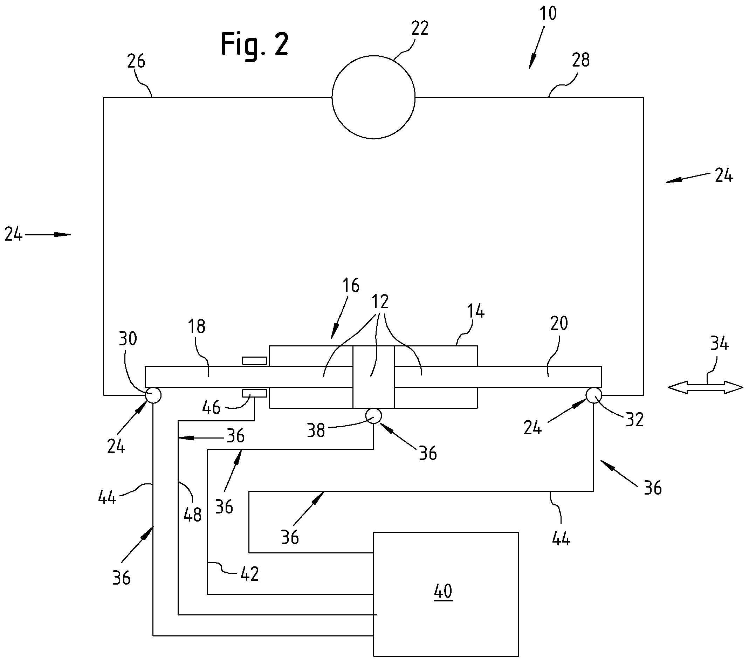

Fig. 2 zeigt ein zweites Ausführungsbeispiel der Erfindung, welches grundsätzlich vergleichbar mit dem in Fig. 1 dargestellten ersten Ausführungsbeispiel ist. Demgemäß ist ein Schleifkontakt 46 am Zylindergehäuse 14 elektrisch isoliert befestigt, wobei der Schleifkontakt 46 der Abgreifeinrichtung 36 zugeordnet ist. Der Schleifkontakt 46 ist am Eintritt des Kolbens 12 bzw. der Kolbenstange 18 vorgesehen. Der Schleifkontakt 46 verbindet den Kolben 12 bzw. die Kolbenstange 18 mit einer elektrischen Leitung 48, welche ihrerseits eine elektrische Verbindung zwischen dem Schleifkontakt 46 und der Auswerteeinrichtung 40 herstellt. Die Verwendung eines Schleifkontakts 46 macht das erfindungsgemäße Messverfahren weniger abhängig von den Kontaktwiderstandsverhältnissen im Bereich der Dichtungen zwischen Kolben 12 und Zylindergehäuse 14. Ansonsten ist die Wirkungsweise des zweiten Ausführungsbeispiels mit derjenigen des ersten Ausführungsbeispiels gemäß Fig. 1 vergleichbar. Es erfolgen zwei Messabgriffe an den Positionen 38 und 46.

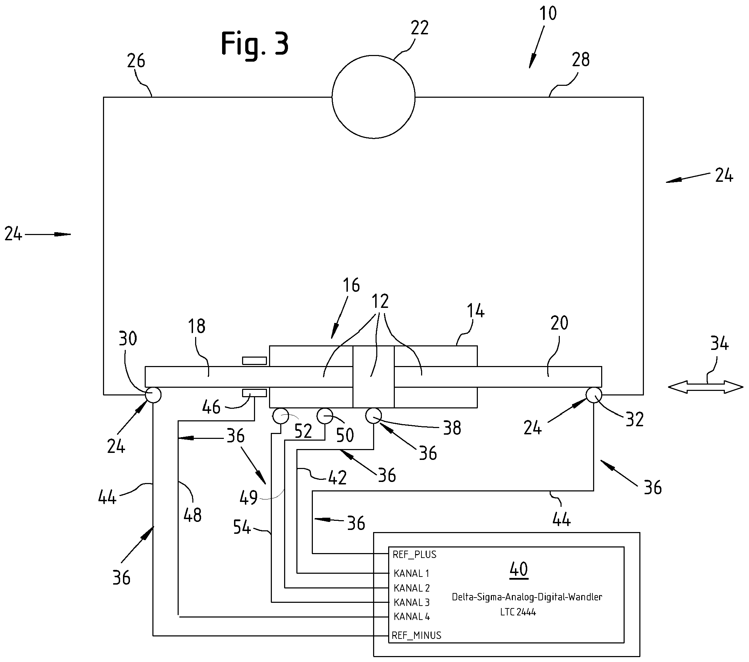

Fig. 3 zeigt ein drittes Ausführungsbeispiel der Erfindung, welches vergleichbar mit dem in Fig. 2 dargestellten zweiten Ausführungsbeispiel ist. Demgemäß weist die Auswerteeinrichtung 40 mehrere Eingangskanäle auf. Weiterhin weist die Abgreifeinrichtung 36 neben der elektrischen Leitung 42, welche die dritte Position 38 mit der Auswerteeinrichtung 40 verbindet, zwei weitere Mittel zum Abgreifen einer Messspannung am Zylinder 16 auf. Dies ist einerseits eine elektrische Leitung 49, welche eine vierte Position 50 mit der Auswerteeinrichtung 40 verbindet. Andererseits wird eine fünfte Position 52 über eine elektrische Leitung 54 mit der Auswerteeinrichtung 40 verbunden. Dementsprechend werden gleichzeitig an dem Zylindergehäuse 14 an insgesamt drei Positionen, nämlich an der dritten Position 38, an der vierten Position 50 und an der fünften Position 52 die dort jeweils vorliegenden Spannungen als Messspannungen abgegriffen und der Auswerteeinrichtung 40 über die Eingangskanäle 1 bis 3 zugeleitet. Auch am Schleifkontakt 46 wird eine Messspannung abgegriffen und über die elektrische Leitung 48 dem Eingangskanal 4 der Auswerteeinrichtung 40 zugeleitet. Mittels des Kelvin-Abgriffs an der ersten Position 30 bzw. der zweiten Position 32 wird über die elektrische Leitung 44 bzw. 48 die von der Einrichtung 22 erzeugte und am Zylinder 16 anliegende Referenzspannung einem MINUS-REFERENZ-Eingangskanal bzw. einem PLUS-REFERENZ-Eingangskanal zugeleitet. Dementsprechend werden insgesamt vier Messspannungen mittels eines in der Auswerteeinrichtung 40 vorgesehenen Delta-Sigma-Analog-Digitalwandlers mit der Bezeichnung LTC 2444 (nicht gezeigt) zur Ermittlung der Position des Kolbens 12 in dem Zylindergehäuse 14 ausgewertet.

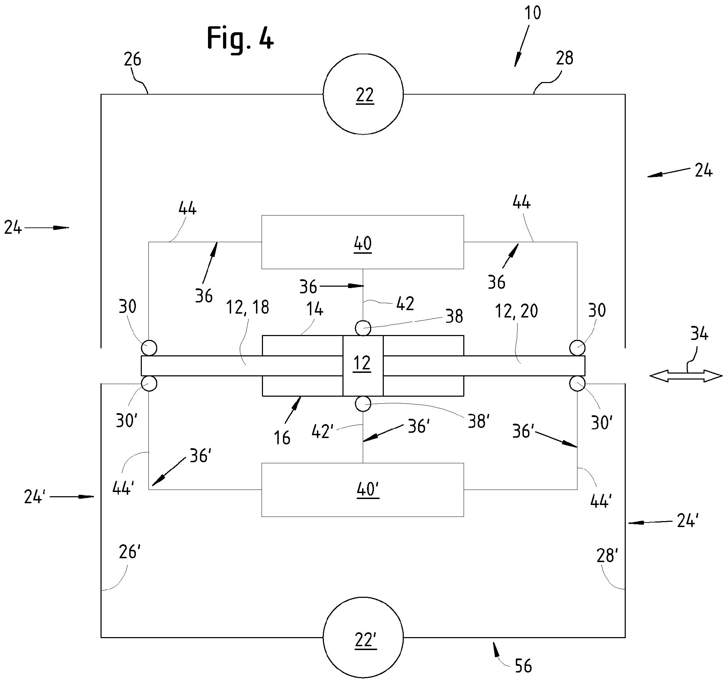

Fig. 4 zeigt ein viertes Ausführungsbeispiel der Erfindung. Es ist eine Messvorrichtung 10 dargestellt, welche vergleichbar zu derjenigen des ersten Ausführungsbeispiels gemäß Fig. 1 ausgebildet ist. Zusätzlich zu der Messvorrichtung 10 ist eine weitere Messvorrichtung 56 vorgesehen, welche identisch zu der Messvorrichtung 10 ausgebildet ist. Die Bezugszeichen der Bauteile der weiteren Messvorrichtung 56, welche den Bauteilen der Messvorrichtung 10 entsprechen, sind mit einem Apostroph gekennzeichnet. Auch die jeweilige Appliziereinrichtung 24' bzw. die Abgreifeinrichtung 36' ist bezüglich der Bewegungsrichtung 34 des Kolbens 12 im Wesentlichen an vergleichbaren Positionen angeordnet. Insoweit ist mittels der beiden Messvorrichtungen 10, 56 eine redundante Positionsbestimmung des Kolbens 12 möglich.

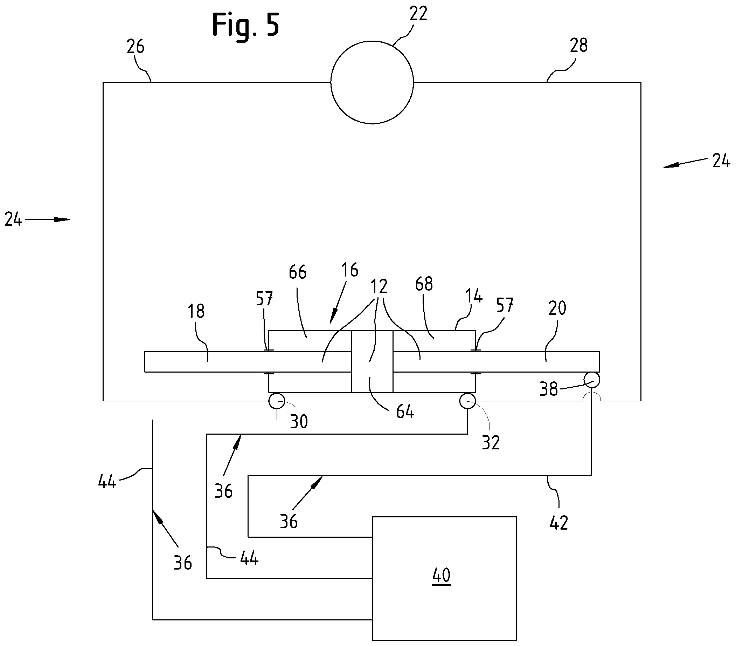

Fig. 5 zeigt ein fünftes Ausführungsbeispiel der Erfindung. Die Appliziereinrichtung 24 weist eine erste Position 30 am linken Ende des Zylindergehäuses 14 und eine zweite Position 32 am rechten Ende des Zylindergehäuses 14 auf. Mit der Abgreifeinrichtung 36 wird an einer dritten Position 38 die Messspannung abgegriffen und der Auswerteeinrichtung 40 zugeführt. Die dritte Position 38 ist am rechten Ende der Kolbenstange 20 vorgesehen. Dementsprechend wird die Messspannung an der Kolbenstange 20 abgegriffen. In diesem Ausführungsbeispiel dienen die metallischen Berührungspunkte im Bereich der Kolbendichtung als Schleifkontakt zwischen Kolben 12 und Zylindergehäuse 14. Die Kolbenstangendichtung 57 zwischen Kolbenstange 18 bzw. 20 und Zylindergehäuse 14 ist isoliert ausgeführt.

Der Zylinder 16 umfasst ein Zylindergehäuse 14 sowie einen Kolben 12. Der Kolben 12 weist eine linke Kolbenstange 18 und eine rechte Kolbenstange 20 sowie einen zwischen den beiden Kolbenstangen 18 und 20 angeordneten Kolbenkörper 64 auf. Der Kolbenkörper 64 dichtet einen linken Ringraum 66 gegenüber einem rechten Ringraum 68 ab und ist im Inneren des Zylindergehäuses 14 beweglich angeordnet. Die Kolbenstangen 18 und 20 können einteilig mit dem Kolbenkörper 64 ausgebildet sein.

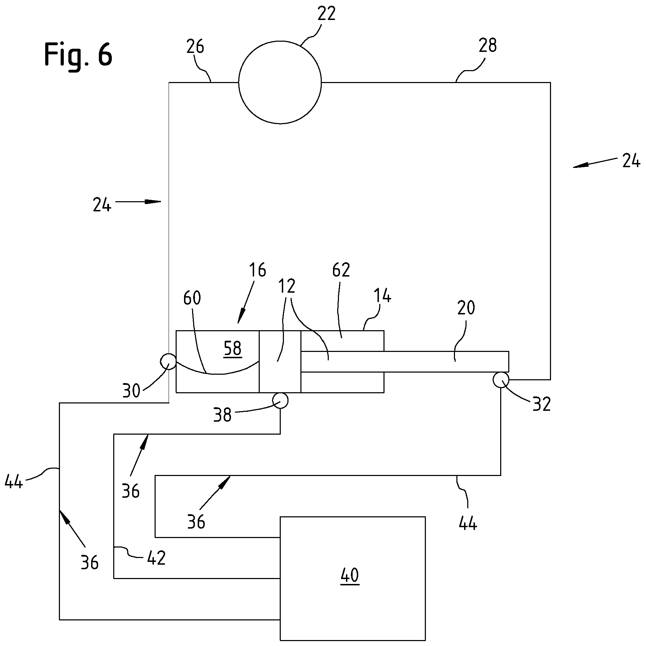

Fig. 6 zeigt ein sechstes Ausführungsbeispiel der Erfindung mit einem Zylinder 16, bei welchem der Kolben 12 lediglich eine einseitig aus dem Zylindergehäuse 14 austretende Kolbenstange 20 aufweist. Die Appliziereinrichtung 24 verbindet die Einrichtung 22 zum Erzeugen der Referenzspannung mit der ersten Position 30, welche am linken Ende des Zylindergehäuses 14 angeordnet ist. Weiterhin verbindet die Appliziereinrichtung 24 die Einrichtung 22 zum Erzeugen der Referenzspannung mit der zweiten Position 32, welche an dem rechten Ende der Kolbenstange 20 vorgesehen ist. Der Abgriff der Messspannung erfolgt in einem mittleren Bereich des Zylindergehäuses 14 an der dritten Position 38 mit der Abgreifeinrichtung 36. Der Kolben 12 ist mit dem Zylindergehäuse 14 über die in der Kolbenkammer 58 vorgesehene elektrische Leitung 60 verbunden. Die innere Verbindung der flexiblen elektrischen Leitung 60 an dem Zylindergehäuse 14 ist in einem Bereich der ersten Position 30 innenseitig angeordnet. Im Ringraum 62 des Zylinders 16 ist keine elektrische Leitungsverbindung vorgesehen. Der Zylinder 16 ist ein doppeltwirkender Hydraulikzylinder. Die Hydraulikleitungen zur Kolbenkammer 58 bzw. zum Ringraum 62 des Zylinders 16 sind der Übersichtlichkeit halber nicht dargestellt.

Abschließend sei darauf hingewiesen, dass die voranstehenden Ausführungsbeispiele lediglich zur Beschreibung der beanspruchten erfindungsgemäßen Lehre dienen, diese jedoch nicht darauf einschränken.

## Patentansprüche

1. Messvorrichtung zur Bestimmung der Position eines Kolbens eines hydraulischen oder pneumatischen Zylinders, mit einem Zylinder (16), welcher ein Zylindergehäuse (14) und einen darin bewegbar angeordneten Kolben (12) umfasst, einer Einrichtung (22) zum Erzeugen einer Referenzspannung, einer Appliziereinrichtung (24) zum Anlegen der Referenzspannung, einer Abgreifeinrichtung (36) zum Abgreifen einer Messspannung, und einer Auswerteeinrichtung (40), welcher die Referenzspannung und die Messspannung zugeführt wird, **dadurch gekennzeichnet, dass** der Zylinder (16) selbst als variabler elektrischer Widerstand ausgebildet ist, dessen Änderung als Maß für die Position des Kolbens dient, wobei die Appliziereinrichtung (24) zum Anlegen der Referenzspannung an einer ersten und an einer zweiten Position (30, 32) elektrisch leitend mit dem Zylinder (16) verbunden ist, wobei die erste Position (30) bezüglich der Bewegungsrichtung (34) des Kolbens (12) beabstandet zu der zweiten Position (32) angeordnet ist, wobei die Abgreifeinrichtung (36) zum Abgreifen der Messspannung an einer dritten Position (38) elektrisch leitend mit dem Zylinder (16) verbunden ist, und wobei ein Spannungsabfall über einen aktiven Bereich des Kolbens bzw. einer Kolbenstange, über den der Kolben bzw. die Kolbenstange verfahren wird und über den der Kolben bzw. die Kolbenstange einen konstanten Querschnitt aufweist, linear von der Entfernung zu der ersten bzw. zweiten Position der Appliziereinrichtung abhängig ist.

2. Messvorrichtung nach Anspruch 1, **dadurch gekennzeichnet, dass** die dritte Position (38) von der ersten Position (30) und/oder von der zweiten Position (32) beabstandet ist.

3. Messvorrichtung nach Anspruch 1 oder 2, **dadurch gekennzeichnet, dass** die Abgreifeinrichtung (36) mindestens ein Mittel (44) aufweist, mittels welchem die Referenzspannung an dem Zylinder (16) abgreifbar ist, wobei vorzugsweise ein erstes Mittel (44) an der ersten Position (30) und ein zweites Mittel (44) an der zweiten Position (32) vorgesehen ist.

4. Messvorrichtung nach Anspruch 3, **dadurch gekennzeichnet, dass** die Abgreifeinrichtung (36) an mindestens einer weiteren Position (46, 50, 52) mindestens ein weiteres Mittel (48, 49, 54) aufweist, mittels welchem eine Messspannung an dem Zylinder (16) abgreifbar ist.

5. Messvorrichtung nach einem der Ansprüche 1 bis 4, **dadurch gekennzeichnet, dass** mindestens eine der drei Positionen (30, 32, 38) an dem Zylindergehäuse (14) und/oder an dem Kolben (12), vorzugsweise am äußeren Ende des Kolbens (18, 20), vorgesehen ist.

6. Messvorrichtung nach einem der Ansprüche 1 bis 5, **dadurch gekennzeichnet, dass** die erste, zweite und/oder dritte Position (30, 32, 38) an der Außenseite des Zylinders (16) vorgesehen ist.

7. Messvorrichtung nach einem der Ansprüche 1 bis 6, **dadurch gekennzeichnet, dass** die Abgreifeinrichtung (36) am Eintritt des Kolbens (12) in das Zylindergehäuse (14) mindestens einen Schleifkontakt aufweist, welcher mit dem Kolben (12) elektrisch leitend verbunden ist.

8. Messvorrichtung nach einem der Ansprüche 1 bis 7, **dadurch gekennzeichnet, dass** im Bereich des Eintritts des Kolbens (12) in das Zylindergehäuse (14) eine elektrisch isolierende Dichtung (57) zwischen Kolben (12) und Zylindergehäuse (14) vorgesehen ist.

9. Messvorrichtung nach einem der Ansprüche 1 bis 8, **dadurch gekennzeichnet, dass** der Kolben (12) mit dem Zylindergehäuse (14) elektrisch leitend verbunden ist, vorzugsweise mittels eines Schleifkontakts zwischen dem Kolben (12) und der Innenwand des Zylindergehäuses (14).

10. Messvorrichtung nach einem der Ansprüche 1 bis 9, **dadurch gekennzeichnet, dass** mittels einer flexiblen elektrischen Leitung (60) eine Position des Inneren des Zylindergehäuses (14) mit einer Position des bewegbar angeordneten Kolbens (12) im Inneren des Zylinders (16) elektrisch verbunden ist.

11. Messvorrichtung nach einem der Ansprüche 1 bis 10, **dadurch gekennzeichnet, dass** mittels der Einrichtung (22) zum Erzeugen einer Referenzspannung eine Gleichspannung, eine Wechselspannung oder eine gepulste Gleichspannung als Referenzspannung zur Verfügung stellbar ist.

12. Lenkzylinder einer Lenkanlage eines Fahrzeugs, wobei der Lenkzylinder ein Zylindergehäuse (14) und einen darin bewegbar angeordneten Kolben (12) aufweist, wobei die Position des Kolbens (12) des Lenkzylinders mittels mindestens einer Messvorrichtung (10, 56) nach einem der Ansprüche 1 bis 11 bestimmt wird.

## Claims

1. Measuring apparatus for determining the position of a piston of a hydraulic or pneumatic cylinder, comprising a cylinder (16) which comprises a cylinder housing (14) and a piston (12) which is moveably arranged therein, a device (22) for generating a reference voltage, an application device (24) for applying the reference voltage, a tapping device (36) for tapping off a measurement voltage, and an evaluation device (40) to which the reference voltage and the measurement voltage are supplied, **characterized in that** the cylinder (16) itself is designed as a variable electrical resistor, the change in which electrical resistor serves as a measure of the position of the piston, wherein the application device (24) for applying the reference voltage is electrically conductively connected to the cylinder (16) at a first and at a second position (30, 32), wherein the first position (30) is arranged at a distance from the second position (32) with respect to the movement direction (34) of the piston (12), wherein the tapping device (36) for tapping off the measurement voltage is electrically conductively connected to the cylinder (16) at a third position (38), and wherein a voltage drop across an active region of the piston or a piston rod, over which region the piston or the piston rod is moved and over which region the piston or the piston rod has a constant cross section, is linearly dependent on the distance from the first or second position of the application device.

2. Measuring apparatus according to Claim 1, **characterized in that** the third position (38) is at a distance from the first position (30) and/or from the second position (32).

3. Measuring apparatus according to Claim 1 or 2, **characterized in that** the tapping device (36) has at least one means (44) by means of which the reference voltage can be tapped off from the cylinder (16), wherein preferably a first means (44) is provided at the first position (30) and a second means (44) is provided at the second position (32).

4. Measuring apparatus according to Claim 3, **characterized in that** the tapping device (36) has at least one further means (48, 49, 54) at at least one further position (46, 50, 52), it being possible to tap off a measurement voltage from the cylinder (16) by means of the said further means.

5. Measuring apparatus according to one of Claims 1 to 4, **characterized in that** at least one of the three positions (30, 32, 38) is provided on the cylinder housing (14) and/or on the piston (12), preferably at the outer end of the piston (18, 20).

6. Measuring apparatus according to one of Claims 1 to 5, **characterized in that** the first, second and/or third position (30, 32, 38) is provided on the outer side of the cylinder (16).

7. Measuring apparatus according to one of Claims 1 to 6, **characterized in that** the tapping device (36) has at least one sliding contact at the inlet of the piston (12) into the cylinder housing (14), which sliding contact is electrically conductively connected to the piston (12).

8. Measuring apparatus according to one of Claims 1 to 7, **characterized in that** an electrically insulating seal (57) is provided between the piston (12) and the cylinder housing (14) in the region of the inlet of the piston (12) into the cylinder housing (14).

9. Measuring apparatus according to one of Claims 1 to 8, **characterized in that** the piston (12) is electrically conductively connected to the cylinder housing (14), preferably by means of a sliding contact between the piston (12) and the inner wall of the cylinder housing (14) .

10. Measuring apparatus according to one of Claims 1 to 9, **characterized in that** a position of the interior of the cylinder housing (14) is electrically connected to a position of the movably arranged piston (12) in the interior of the cylinder (16) by means of a flexible electrical line (60).

11. Measuring apparatus according to one of Claims 1 to 10, **characterized in that** a DC voltage, an AC voltage or a pulsed DC voltage can be provided as reference voltage by means of the device (22) for generating a reference voltage.

12. Steering cylinder of a steering system of a vehicle, wherein the steering cylinder has a cylinder housing (14) and a piston (12) which is moveably arranged therein, wherein the position of the piston (12) of the steering cylinder is determined by means of at least one measuring apparatus (10, 56) according to one of Claims 1 to 11.

## Revendications

1. Dispositif de mesure pour déterminer la position d'un piston d'un vérin hydraulique ou pneumatique, comprenant un vérin (16) qui comprend un boîtier de vérin (14) et un piston (12) disposé de manière déplaçable dans celui-ci, un dispositif (22) pour générer une tension de référence, un dispositif d'application (24) pour appliquer la tension de référence, un dispositif de saisie (36) pour saisir une tension de mesure et un dispositif d'analyse (40) auquel sont acheminées la tension de référence et la tension de mesure,
**caractérisé en ce que** le vérin (16) est lui-même réalisé en tant que résistance électrique variable, dont la variation sert de mesure pour la position du piston, le dispositif d'application (24) pour l'application de la tension de référence étant connecté de manière électriquement conductrice au vérin (16) au niveau d'une première et d'une deuxième position (30, 32), la première position (30) étant disposée par rapport à la direction de déplacement (34) du piston (12) à distance de la deuxième position (32), le dispositif de saisie (36) pour saisir la tension de mesure étant connecté de manière électriquement conductrice au vérin (16) au niveau d'une troisième position (38), et une chute de tension sur une plage active du piston ou d'une tige de piston sur laquelle le piston ou la tige de piston est déplacé(e) et sur laquelle le piston ou la tige de piston présente une section transversale constante, étant linéairement dépendante d'une distance à la première ou à la deuxième position du dispositif d'application.

2. Dispositif de mesure selon la revendication 1, **caractérisé en ce que** la troisième position (38) est espacée de la première position (30) et/ou de la deuxième position (32).

3. Dispositif de mesure selon la revendication 1 ou 2, **caractérisé en ce que** le dispositif de saisie (36) présente au moins un moyen (44) au moyen duquel la tension de référence au niveau du vérin (16) peut être saisie, un premier moyen (44) étant de préférence prévu au niveau de la première position (30) et un deuxième moyen (44) étant de préférence prévu au niveau de la deuxième position (32).

4. Dispositif de mesure selon la revendication 3, **caractérisé en ce que** le dispositif de saisie (36) présente, au niveau d'au moins une position supplémentaire (46, 50, 52), au moins un moyen supplémentaire (48, 49, 54) au moyen duquel une tension de mesure au niveau du vérin (16) peut être saisie.

5. Dispositif de mesure selon l'une quelconque des revendications 1 à 4, **caractérisé en ce qu'**au moins l'une des trois positions (30, 32, 38) est prévue au niveau du boîtier de vérin (14) et/ou au niveau du piston (12), de préférence au niveau de l'extrémité extérieure du piston (18, 20).

6. Dispositif de mesure selon l'une quelconque des revendications 1 à 5, **caractérisé en ce que** la première, deuxième et/ou troisième position (30, 32, 38) sont prévues au niveau du côté extérieur du vérin (16).

7. Dispositif de mesure selon l'une quelconque des revendications 1 à 6, **caractérisé en ce que** le dispositif de saisie (36) présente, à l'entrée du piston (12) dans le boîtier de vérin (14), au moins un contact glissant qui est connecté de manière électriquement conductrice au piston (12).

8. Dispositif de mesure selon l'une quelconque des revendications 1 à 7, **caractérisé en ce que** dans la région de l'entrée du piston (12) dans le boîtier de vérin (14) est prévu un joint d'étanchéité électriquement isolant (57) entre le piston (12) et le boîtier de vérin (14).

9. Dispositif de mesure selon l'une quelconque des revendications 1 à 8, **caractérisé en ce que** le piston (12) est connecté de manière électriquement conductrice au boîtier de vérin (14), de préférence au moyen d'un contact glissant entre le piston (12) et la paroi interne du boîtier de vérin (14).

10. Dispositif de mesure selon l'une quelconque des revendications 1 à 9, **caractérisé en ce qu'**au moyen d'une conduite électrique flexible (60), une position de l'intérieur du boîtier de vérin (14) est connectée électriquement à une position du piston disposé de manière déplaçable (12) à l'intérieur du vérin (16).

11. Dispositif de mesure selon l'une quelconque des revendications 1 à 10, **caractérisé en ce qu'**au moyen du dispositif (22) pour générer une tension de référence, une tension continue, une tension alternative ou une tension continue pulsée peuvent être fournies en tant que tension de référence.

12. Vérin de direction d'une installation de direction d'un véhicule, le vérin de direction présentant un boîtier de vérin (14) et un piston (12) disposé de manière déplaçable dans celui-ci, la position du piston (12) du vérin de direction étant déterminée au moyen d'au moins un dispositif de mesure (10, 56) selon l'une quelconque des revendications 1 à 11.
